# EUROPÄISCHE PATENTANMELDUNG

(11) **EP 1 491 396 A1**
(43) Veröffentlichungstag der Anmeldung: **29.12.2004**
(21) Anmeldenummer: 03014663.3
(22) Anmeldetag: 27.06.2003
(51) Int. Cl.: B60P 1/44, B60P 1/16

(54) **Hubladebühne mit faltbarer Plattform**

(71) Anmelder: Gerd Bär GmbH, 74078 Heilbronn (DE)
(72) Erfinder: Falk, Markus, 74626 Bretzfeld (DE)
(74) Vertreter: Kohler Schmid Möbus

(57) **Zusammenfassung**

Bei einer Hubladebühne für ein Fahrzeug mit einem Hubwerk (20), das mindestens einen drehbar gelagerten Tragarm (21) und eine an diesem verschwenkbar gelagerte Plattform (34) aufweist, die zu einem Plattformpaket (30) faltbar ist, welches nach Herumschwenken um mehr als 90° in Richtung Tragarm (21) durch Anheben des Tragarms (21) in eine Verstaustellung verfahrbar ist, sowie mit einem Führungselement (43), auf dem das herumgeschwenkte Plattformpaket (30) beim Anheben und'Absenken des Tragarms (21) abgestützt ist, ist das Führungselement (43) ortsveränderlich gelagert und mit dem Hubwerk (20) derart bewegungsgekoppelt, dass bei abgesenktem Tragarm (21) und zumindest im unteren Schwenkbereich des Tragarms (21) das Plattformpaket (30) am Führungselement (43) abgestützt ist.

## Beschreibung

Die vorliegende Erfindung betrifft eine Hubladebühne für ein Fahrzeug, mit einem Hubwerk, das mindestens einen drehbar gelagerten Tragarm und eine an diesem verschwenkbar gelagerte Plattform aufweist, die zu einem Plattformpaket faltbar ist, welches nach Herumschwenken um mehr als 90° in Richtung Tragarm durch Anheben des Tragarms in eine Verstaustellung verfahrbar ist, sowie mit einem Führungselement, auf dem das herumgeschwenkte Plattformpaket beim Anheben und Absenken des Tragarms abgestützt ist.

Faltbare Hubladebühnen haben wie Standard Hubladebühnen ein parallelogrammförmiges Hubwerk, welches fest am Fahrzeug montiert ist. Die Plattformspitze (Plattformfaltteil) ist einmal faltbar, und dieses zusammengefaltete Plattformpaket wird dann auf die beiden parallelen Tragarme des Hubwerks herumgeschwenkt und durch hydraulisches Hochschwenken der Tragarme unter dem Fahrzeugaufbau verstaut. Das 180°-Falten des Plattformfaltteils zum Plattformpaket erfolgt immer manuell, manchmal federunterstützt. Das Herumschwenken des Plattformpakets erfolgt in den ersten etwas mehr als 90° von der waagerechten Arbeitsposition in die Senkrechte (oberer Totpunkt) federunterstützt und ebenfalls von Hand.

Bei bekannten Hubladebühnen wird das Plattformpaket über den oberen Totpunkt in Fahrtrichtung herumgeschwenkt, bis das Plattformpaket mit der Unterseite des Plattformfaltteils an einer fahrzeugseitig ortsfesten Rolle anliegt. Beim Hochschwenken der Tragarme legt sich das Plattformpaket dann auf der Rolle entsprechend waagrecht, um danach auf den Tragarmen aufzuliegen und vollends in seine Verstauposition verfahren zu werden. Sobald das Plattformpaket auf den Tragarmen aufliegt, beschreibt es den gleichen Radius wie die Tragarme. Solange das Plattformpaket durch die Rolle geführt wird, beschreibt die äußere Kante des Plattformpakets eine Schwenkkurve, die den benötigten Freiraum unter dem Fahrzeugaufbau vorgibt. Dabei sind Lage und Anstellwinkel des Plattformpakets an der ortsfesten Rolle abhängig vom Absenkwinkel der am Boden aufliegenden Tragarme. Da sich dieser Absenkwinkel entsprechend der Beladung (Einfederung) des Fahrzeugs oder aufgrund von Bodenunebenheiten ändert, ist bei stark eingefedertem Fahrzeug der Anstellwinkel des Plattformpakets an der Rolle sehr flach, so dass das Plattformpaket vom Bediener mit hohem Kraftaufwand in die Arbeitsposition geschwenkt werden muss.

Da das Plattformpaket unter den Fahrzeugaufbau hochgeschwenkt wird, muss das Plattformpaket zwangsläufig niedriger sein als die Unterkante des Fahrzeugsaufbaus. Hierbei sind noch zusätzlich der Federweg der Fahrzeugfederung und ein unebenes Gelände zu berücksichtigen. Da heute einerseits Fahrzeuge zur Gewinnung von Volumen immer niedriger gebaut werden und andererseits größere Plattform zur Erhöhung der Ladesicherheit gefordert werden, besteht hier ein Zielkonflikt.

Der Erfindung liegt daher die Aufgabe zugrunde, eine Hubladebühne der eingangs genannten Art dahingehend weiterzubilden, dass der für das Hochschwenken des Plattformpakets in seine Verstaustellung erforderliche Freiraum unterhalb des Fahrzeugaufbaus reduziert werden kann.

Diese Aufgabe wird erfindungsgemäß dadurch gelöst, dass das Führungselement ortsveränderlich gelagert und mit dem Hubwerk derart bewegungsgekoppelt ist, dass bei abgesenktem Tragarm und zumindest im unteren Schwenkbereich des Tragarms das Plattformpaket am Führungselement abgestützt ist.

Erfindungsgemäß ist das Führungselement nicht ortsfest angeordnet, sondern beispielsweise in einem ortsfesten Drehpunkt gelagert, wobei die Drehbewegung des Führungselements durch das Hubwerk, insbesondere den Tragarm, gesteuert wird. Der Anstellwinkel des Plattformpakets an das ortsveränderliche Führungselement ist erfindungsgemäß praktisch unabhängig vom Absenkwinkel der Tragarme und wird daher so steil eingestellt, dass das Plattformpaket vom Bediener mit dem stets gleichen geringen Kraftaufwand in die Arbeitsposition geschwenkt werden kann.

Besonders bevorzugte Ausführungsformen der Erfindung zeichnen sich dadurch aus, dass das Führungselement bei abgesenktem Tragarm weiter in den Schwenkbereich des Plattformpakets eingreift als bei angehobenem Tragarm und dass das herumgeschwenkte Plattformpaket während des gesamten Anhebe- und Absenkvorgangs des Tragarms am Führungselement abgestützt ist.

Vorzugsweise ist das Führungselement an einem nach oben abgewinkelten Winkelhebel vorgesehen, dessen erster Arm ortsfest an der Hubladebühne und dessen zweiter Arm am Hubwerk drehbar gelagert ist. Beim Hochschwenken des Tragarms wird der Winkelhebel gestreckt, so dass die vom Plattformpaket beim Anheben und Absenken des Tragarms beschriebene Schwenkkurve flacher als bei einem fest montierten Führungselement verläuft. Beim Absenken des Tragarms wird das Plattformpaket vom Führungselement in Richtung des oberen Totpunkts aufstellt. Damit wird erreicht, dass das Führungselement immer etwa in der Mitte des Plattformpakets angreift und daher immer eine genügend große, abwärts gerichtete Gewichtskomponente übrig bleibt, so dass sich das Plattformpaket sicher aufstellt.

Die erfindungsgemäße Lagerung des Führungselements an einem Winkelhebel ist bei allen Hubladebühnen, auch solchen mit durchgehendem und mitfahrendem Unterfahrschutz, verwendbar.

Besonders bevorzugt ist das Führungselement als Rolle ausgebildet und im Gelenkdrehpunkt des Winkelhebels drehbar gelagert. Diese Ausführung des Führungselements als Rolle im Gelenkdrehpunkt des Winkelhebels ist einfach und kostengünstig.

Weiterhin bevorzugt ist einer oder beide Arme des Winkelhebels in der Länge verstellbar, um die optimalen Hebellängen des Winkelhebels einstellen zu können. Wenn die optimalen Hebellängen eingestellt sind, ist automatisch die optimale Schwenkkurve des Plattformpakets beim Anheben und Absenken des Tragarms erreicht.

Weitere vorteilhafte Ausgestaltungen der Erfindung sind Gegenstand der Unteransprüche. Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: eine Seitenansicht der erfindungsgemäßen Hubladebühne mit dem in seine Verstaustellung angehobenen Plattformpaket;
- Fig. 2: die Hubladebühne der Fig. 1 mit dem etwa auf halbe Höhe abgesenkten Plattformpaket;
- Fig. 3: die Hubladebühne der Fig. 1 mit dem auf den Boden abgesenkten Plattformpaket;
- Fig. 4: die in Fig. 1 gezeigte Hubladebühne, jedoch montiert an einem Fahrzeug, bei dem die Hubladebühne in ihrer maximalen Entfernung zum Erdboden angeordnet ist; und
- Fig. 5: das Plattformpaket der in Fig. 4 gezeigten Hubladebühne in seiner horizontalen Arbeitsstellung in zusammengefaltetem und entfaltetem Zustand.

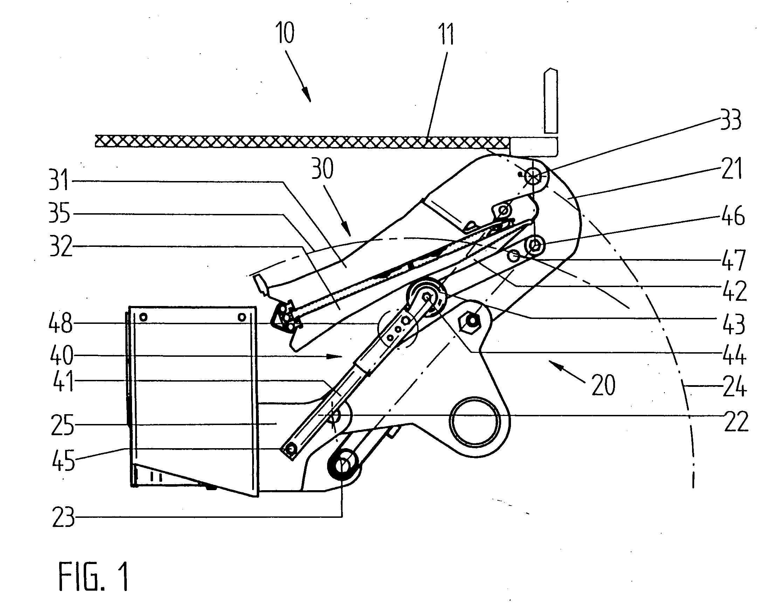

Die in **Fig. 1** gezeigte Hubladebühne hat ein parallelogrammförmiges Hubwerk **20** mit zwei parallelen Tragarmen **21**, an denen eine Plattform angelenkt ist, und mit einem am einem Tragarm 21 angreifenden Hubzylinder (nicht gezeigt) zum Heben und Senken der Plattform und mit einem Parallelzylinder (nicht gezeigt) zum Abkippen der Plattform auf den Boden. Die Plattform ist an den beiden Tragarmen 21 um den oberen Plattformdrehpunkt **33** zwischen einer horizontalen Arbeitsstellung (Fig. 5) und einer Verstaustellung verschwenkbar gelagert und hat ein Plattformfestteil **31**, an dem die Plattformspitze als Plattformfaltteil **32** schwenkbar gelagert ist. Durch Umklappen des Plattformfaltteils 32 um 180° lässt sich die Plattform zu einem Plattformpaket **30** zusammenfalten, wie in Fig. 5 gezeigt ist.

Der Tragarm 21 bildet die in Fig. 1 strichpunktiert angedeutete obere Parallelogrammstrebe und ist einerseits an einer ortsfesten Anschlusskonsole **25** der Hubladebühne im oberen Tragarmdrehpunkt **22** und andererseits am Plattformfestteil 31 im oberen Plattformdrehpunkt **33** drehbar gelagert. Die untere Parallelogrammstrebe, die in Fig. 1 ebenfalls strichpunktiert angedeutet ist, ist einerseits an der Anschlusskonsole 25 im unteren Parallelogrammpunkt **23** und andererseits am Plattformfestteil 31 im unteren Plattformdrehpunkt, der in Fig.1 zufällig mit dem Punkt 46 zusammenfällt, drehbar gelagert.

In Fig. 1 ist das Plattformpaket 30 in seiner unter den Ladeboden **11** eines Fahrzeugaufbaus **10** angehobenen Verstaustellung gezeigt. Das im Plattformdrehpunkt 33 mit dem Tragarmen 21 drehbar verbundene Plattformpaket 30 liegt auf der Rolle **43** auf, die im Gelenkdrehpunkt **44** eines nach oben abgewinkelten Winkelhebels **40** drehbar gelagert ist. Der erste Arm **41** des Winkelhebels 40 ist an der Anschlusskonsole 25 ortsfest im Drehpunkt **45** und der zweite Arm **42** am Tragarm 21 im Drehpunkt **46** gelagert. Die Verstaustellung des Plattformpakets 30 ist erreicht, wenn das Plattformfestteils 31 unten am rechteckrohrförmigen Ende des Fahrzeugaufbaus 10 anliegt. Um die Hebellänge der Arme 41, 42 verstellen zu können, ist der erste Arm 40 als Teleskoparm mit mehreren Verstelllöchern **48** und der zweite Arm 42 mit einem alternativen Lagerloch **47** ausgebildet.

**Fig. 2** zeigt das Ausfalten des Plattformpakets 30, was durch Absenken der Tragarme 21 entsprechend dem Tragarmradius **24** erfolgt. Hierbei verkürzt sich der Abstand der beiden Hebeldrehpunkte 45, 46, wodurch sich der Winkelhebel 40 nach oben aufrichtet und das Plattformpaket 30 gegenüber den Tragarmen 21 anhebt. Die hierbei vom Plattformpaket 30 beschriebene Schwenkkurve **35** zeigt den benötigten Freiraum für den Ausfaltvorgang des Plattformpakets 30.

In **Fig. 3** sind die Tragarme 21 auf den Boden abgesenkt. Die hierbei erfolgte weitere Abstandsverkürzung der beiden Hebeldrehpunkte 45, 46 hat den Winkelhebel 40 gegenüber dem Tragarm 21 noch weiter nach oben aufgerichtet, so dass die Rolle 43 das Plattformpaket 30 bis kurz vor die senkrechte Schwenkstellung (oberer Totpunkt) aufgestellt hat. In Fig. 3 sind die Verhältnisse bei einem sogenannten tiefen Hubladebühnenanbau dargestellt, bei dem der Abstand Eₘᵢₙ des Tragarmdrehpunktes 22 zum Boden minimal klein ist. Hierbei müssen die Hebellängen der beiden Arme 41, 42 maximal gewählt sein, um das Plattformpaket 30 nahe an den oberen Totpunkt heranzubringen.

**Fig. 4** entspricht Fig. 3, jedoch mit dem Unterschied, dass der Abstand Eₘₐₓ des Tragarmdrehpunktes 22 zum Erdboden der maximalen Entfernung entspricht. Um das Plattformpaket 30 nahe an den oberen Totpunkt zu bringen, ist der erste Arm 41 auf seine maximale und der zweite Arm 42 auf seine minimale Hebellänge eingestellt. Das weitere Verschwenken des Plattformpakets 30 über den oberen Totpunkt hinaus in die horizontale Arbeitsstellung erfolgt nunmehr von Hand, entsprechend der vom Plattformpaket 30 beschriebenen Schwenkkurve **36.** Über diesen ca. 90°-Schwenkbereich ist eine entsprechende Federentlastung vorgesehen, die jedoch nicht dargestellt ist.

**Fig. 5** zeigt das Entfalten des Plattformpakets 30 durch Aufklappen des Plattformfaltteils 32 entsprechend der Schwenkkurve **37** um 180°, wodurch sich die gestrichelt dargestellte Plattform **34** in ihrer horizontalen Arbeitsstellung ergibt. Nunmehr kann die faltbare Hubladebühne auf bekannte Art und Weise zum Be- und Entladen eingesetzt werden. Das Einfalten und Verstauen nach dem Arbeitsspiel erfolgt in umgekehrter Reihenfolge.

Alle Figuren zeigen weder die die Hub- und Senkfunktion ausführenden Hubzylinder noch das Widerlager, welches das Plattformfestteil 31 in der horizontalen Arbeitsstellung hält.

## Patentansprüche

1. Hubladebühne für ein Fahrzeug, mit einem Hubwerk (20), das mindestens einen drehbar gelagerten Tragarm (21) und eine an diesem verschwenkbar gelagerte Plattform (34) aufweist, die zu einem Plattformpaket (30) faltbar ist, welches nach Herumschwenken um mehr als 90° in Richtung Tragarm (21) durch Anheben des Tragarms (21) in eine Verstaustellung verfahrbar ist, sowie mit einem Führungselement (43), auf dem das herumgeschwenkte Plattformpaket (30) beim Anheben und Absenken des Tragarms (21) abgestützt ist,
**dadurch gekennzeichnet,**
**dass** das Führungselement (43) ortsveränderlich gelagert und mit dem Hubwerk (20) derart bewegungsgekoppelt ist, dass bei abgesenktem Tragarm (21) und zumindest im unteren Schwenkbereich des Tragarms (21) das Plattformpaket (30) am Führungselement (43) abgestützt ist.

2. Hubladebühne nach Anspruch 1, **dadurch gekennzeichnet, dass** das Führungselement (43) bei abgesenktem Tragarm (21) weiter in den Schwenkbereich des Plattformpakets (30) eingreift als bei angehobenem Tragarm (21).

3. Hubladebühne nach Anspruch 1 oder 2, **dadurch gekennzeichnet, dass** das Führungselement (43) um einen ortsfesten, insbesondere an der Hubladebühne vorgesehenen, Drehpunkt (45) verschwenkbar gelagert ist.

4. Hubladebühne nach einem der vorhergehenden Ansprüche, **dadurch gekennzeichnet, dass** das herumgeschwenkte Plattformpaket (30) während des gesamten Anhebe- und Absenkvorgangs des Tragarms (21) am Führungselement (43) abgestützt ist.

5. Hubladebühne nach einem der vorhergehenden Ansprüche, **dadurch gekennzeichnet, dass** das Führungselement (43) an einem nach oben abgewinkelten Winkelhebel (40) vorgesehen ist, dessen erster Arm (41) ortsfest an der Hubladebühne und dessen zweiter Arm (42) am Hubwerk (20) drehbar gelagert ist.

6. Hubladebühne nach Anspruch 5, **dadurch gekennzeichnet, dass** der erste Arm (41) des Winkelhebels (40) an einer Flanschkonsole (25) des Hubwerks (20) drehbar gelagert ist.

7. Hubladebühne nach Anspruch 5 oder 6, **dadurch gekennzeichnet, dass** der zweite Arm (42) des Winkelhebels (40) am Tragarm (21) oder an einem daran befestigten Teil drehbar gelagert ist.

8. Hubladebühne nach einem der Ansprüche 5 bis 7, **dadurch gekennzeichnet, dass** sich der Abstand der Drehpunkte (45, 46) der beiden Arme (41, 42) des Winkelhebels (40) beim Anheben des Tragarms (21) vergrößert.

9. Hubladebühne nach einem der Ansprüche 5 bis 8, **dadurch gekennzeichnet, dass** das Führungselement (43) im Bereich des Gelenkdrehpunktes (44) des Winkelhebels (40), insbesondere im Gelenkdrehpunkt (44), drehbar gelagert ist.

10. Hubladebühne nach einem der Ansprüche 5 bis 9, **dadurch gekennzeichnet, dass** einer oder beide Arme (41, 42) des Winkelhebels (40) in der Hebellänge verstellbar sind.

11. Hubladebühne nach einem der vorhergehenden Ansprüche, **dadurch gekennzeichnet, dass** das Führungselement (43) eine drehbar gelagerte Rolle ist.

1. Hubladebühne für ein Fahrzeug, mit einem Hubwerk (20), das mindestens einen drehbar gelagerten Tragarm (21) und eine an diesem verschwenkbar gelagerte Plattform (34) aufweist, die zu einem Plattform paket (30) faltbar ist, welches nach Herumschwenken um mehr als 90° in Richtung Tragarm (21) durch Anheben des Tragarms (21) in eine Verstaustellung verfahrbar ist, sowie mit einem Führungselement (43), auf dem das herumgeschwenkte Plattformpaket (30) beim Anheben und Absenken des Tragarms (21) abgestützt ist, wobei das Führungselement (43) ortsveränderlich gelagert und mit dem Hubwerk (20) derart bewegungsgekoppelt ist, dass bei abgesenktem Tragarm (21) und zumindest im unteren Schwenkbereich des Tragarms (21) das Plattformpaket (30) am Führungselement (43) abgestützt ist,
**dadurch gekennzeichnet,**
**dass** das Führungselement (43) an einem nach oben abgewinkelten Winkelhebel (40) vorgesehen ist, dessen erster Arm (41) ortsfest an der Hubladebühne und dessen zweiter Arm (42) am Hubwerk (20) drehbar gelagert ist.

2. Hubladebühne nach Anspruch 1, **dadurch gekennzeichnet, dass** der erste Arm (41) des Winkelhebels (40) an einer Flanschkonsole (25) des Hubwerks (20) drehbar gelagert ist.

3. Hubladebühne nach Anspruch 1 oder 2, **dadurch gekennzeichnet, dass** der zweite Arm (42) des Winkelhebels (40) am Tragarm (21) oder an einem daran befestigten Teil drehbar gelagert ist.

4. Hubladebühne nach einem der vorhergehenden Ansprüche, **dadurch gekennzeichnet, dass** sich der Abstand der Drehpunkte (45, 46) der beiden Arme (41, 42) des Winkelhebels (40) beim Anheben des Tragarms (21) vergrößert.

5. Hubladebühne nach einem der vorhergehenden Ansprüche, **dadurch gekennzeichnet, dass** das Führungselement (43) im Bereich des Gelenkdrehpunktes (44) des Winkelhebels (40), insbesondere im Gelenkdrehpunkt (44), drehbar gelagert ist.

6. Hubladebühne nach einem der vorhergehenden Ansprüche, **dadurch gekennzeichnet, dass** einer oder beide Arme (41, 42) des Winkelhebels (40) in der Hebellänge verstellbar sind.

7. Hubladebühne nach einem der vorhergehenden Ansprüche, **dadurch gekennzeichnet, dass** das Führungselement (43) eine drehbar gelagerte Rolle ist.

8. Hubladebühne nach einem der vorhergehenden Ansprüche, **dadurch gekennzeichnet, dass** das Führungselement (43) bei abgesenktem Tragarm (21) weiter in den Schwenkbereich des Plattformpakets (30) eingreift als bei angehobenem Tragarm (21).

9. Hubladebühne nach einem der vorhergehenden Ansprüche, **dadurch gekennzeichnet, dass** das Führungselement (43) um einen ortsfesten, insbesondere an der Hubladebühne vorgesehenen, Drehpunkt (45) verschwenkbar gelagert ist.

10. Hubladebühne nach einem der vorhergehenden Ansprüche, **dadurch gekennzeichnet, dass** das herumgeschwenkte Plattformpaket (30) während des gesamten Anhebe- und Absenkvorgangs des Tragarms (21) am Führungselement (43) abgestützt ist.
